# EUROPEAN PATENT APPLICATION

(11) **EP 4 841 024 A2**
(43) Date of publication of application: **18.11.2026**
(21) Application number: 26196222.9
(22) Date of filing: 27.06.2022
(51) Int. Cl.: E02B 17/00

(54) **A VESSEL AND METHOD CONFIGURED TO INSTALL A FOUNDATION STRUCTURE**

(30) Priority: 19.07.2021 DK PA202170385
(62) Document number(s) of the earlier application(s) in accordance with Art. 76 EPC: 22735427.1 / 4 373 734
(71) Applicant: Ulstein Design & Solutions B.V., 3045 AP Rotterdam (NL)
(72) Inventor: STROO, Jacobus Dingeman, 2613 JT Delft (NL)
(74) Representative: Plougmann Vingtoft a/s

(57) **Abstract**

The present invention relates to a vessel and a method configured to install a foundation structure, such as a monopile, at a position at sea, the position may be a foundation extending from the seabed or may be a position in or on the seabed, the foundation structure comprising an elongate element.

## Description

### FIELD OF THE INVENTION

The present invention relates to a vessel and a method configured to install a foundation structure, such as a monopile, at a position at sea, the position may be a foundation extending from the seabed or may be a position in or on the seabed, the foundation structure comprising an elongate element.

### SUMMARY OF THE INVENTION

The invention relates in a first aspect to a vessel configured to install a foundation structure, such as a monopile, at a position at sea, the position may be a foundation extending from the seabed or may be a position in or on the seabed, the foundation structure comprising an elongate element, the vessel preferably comprising:
- a hull having stern at the aft of the vessel, wherein the stern is provided with recess extending from the stern and towards a bow of the vessel, the recess provides an opening going through the hull allowing sea access from a deck position,
- an upending device arranged at the recess, said upending device being configured to
   ∘ receive at least a section of said foundation structure being positioned substantially horizontally and axially aligned with a center line of the vessel, and
   ∘ rotate about a horizontal rotational axis being substantially perpendicular to the center line of the vessel so that upon rotating, said end of the foundation structure is positioned in the recess and with the foundation structure in an upright position,
   ∘ provide a vertical lowering within the recess of the foundation structure to said position at sea for installation.

The invention relates in a second aspect to a method of installing a foundation structure, such as a monopile, at a position at sea, the position may be a foundation extending from the seabed or may be a position in or on the seabed, the method is carried out by use of the vessel according to the first aspect and may preferably comprise:
- arranging a foundation structure in the upending device,
- rotate the upending device by an amount positioning the foundation structure in an upright position, and
- provide a vertical lowering within the recess of the foundation structure to said position at sea for installation.

### BRIEF DESCRIPTION OF THE FIGURES

The present invention and in particular preferred embodiments thereof will now be disclosed in more details with reference to the accompanying figures. The figures show ways of implementing the present invention and are not to be construed as being limiting to other possible embodiments falling within the scope of the attached claim set.

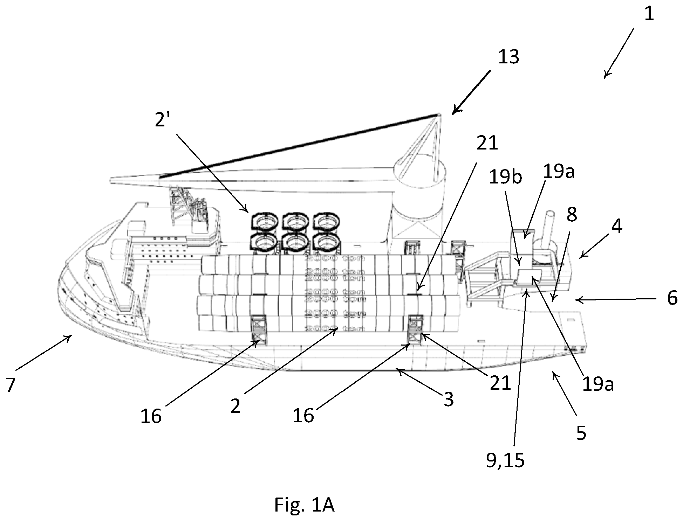

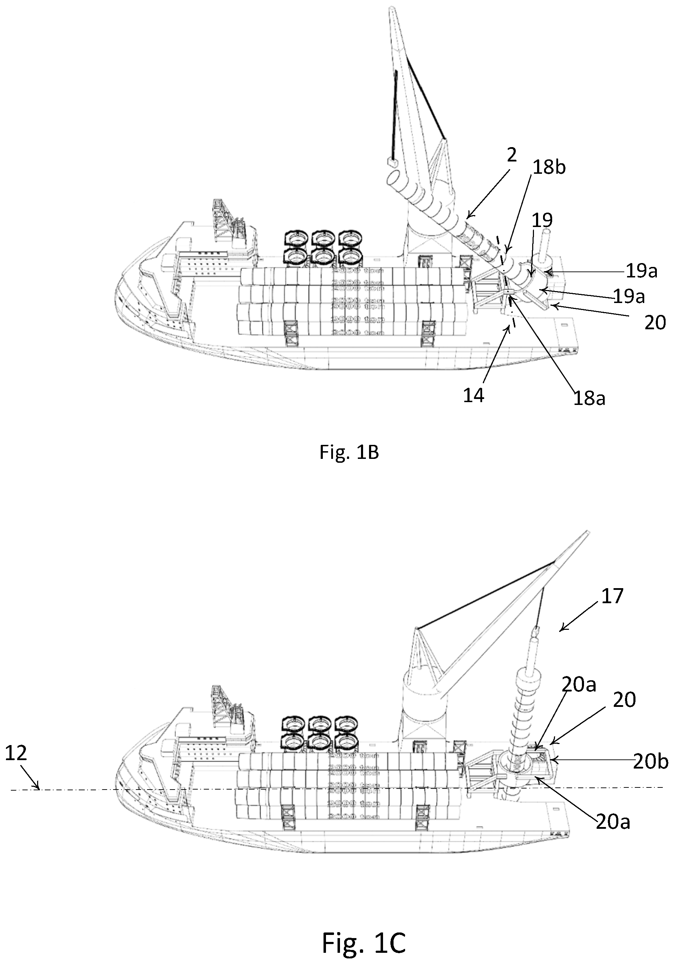

Figure 1 shows a first embodiment according to the invention; fig. 1A shows the vessel without a foundation structure arranged in the upending device, and figs. 1B and 1C show the vessel with a foundation structure arranged in the upending device at two positions where fig. 1C illustrates the upending device in the position where the foundation structure is vertical ready for being installed;

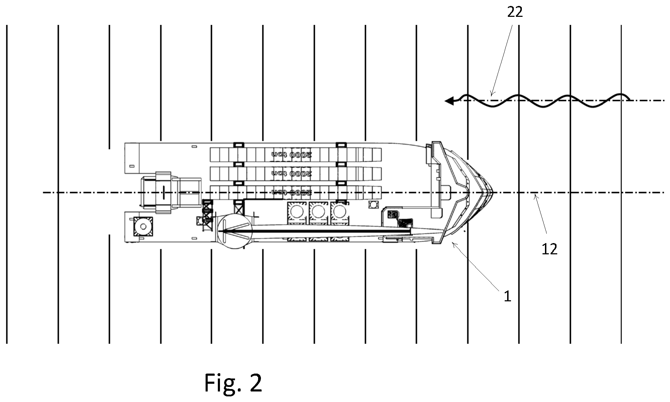

Figure 2 shows schematically a vessel in a designated location for installation of a foundation structure and where the vessel is maintained in a preferred orientation relatively a wave propagation direction;

### DETAILED DESCRIPTION OF PREFERRED EMBODIMENTS

Reference is made to the figures and in particular fig. 1 showing a vessel 1 being configured to install a foundation structure 2. The vessel may also be referred to as a ship. The foundation structure may be a monopile but the invention is not limited to such monopiles. The position at which the foundation structure 2 is to be positioned is a position at sea and that position may be a foundation extending from the seabed or may be a position in or on the seabed. As illustrated, the foundation structure 2 comprising an elongate element, typically a tubular element.

As illustrated, the vessel comprises a hull 3 having stern 4 at the aft 5 of the vessel 1. The stern is provided with a recess 6 extending from the stern and towards a bow 7 of the vessel 1. As illustrated the recess provides an opening in the stern as well as opening 8 going through the hull 3. Thereby, sea access from a deck position is provided.

The vessel is equipped with one or more propulsion devices to manoeuvre the vessel between different locations and dynamically maintain the vessel in a designated location for installation of a foundation structure 2. The propulsion devices may be one or more thrusters such as an azimuth thruster, a bow thruster and/or an inboard engine connected to a propeller. Maintaining the vessel in the designated location may be fully or partly automated based on position reference sensors. Such sensors may include one or more of GPS, laser radius, subsea acoustics, taut wire positioning systems and the like. For a taut wire positioning system a clump weight is lowered to the seabed connected with a taut wire and a sensor is used to measure the angle of the taut wire to calculate the position. In such embodiments, a controller receives position coordinates and operates the one or more propulsion devices to manoeuvre so as to maintain the designated position.

Maintaining of the vessel in the designated position may also be obtained passively by anchoring the vessel to the seabed at the designated position. A combination of dynamically and passively maintaining the vessel at the designated position is also considered within the scope of the present invention.

During installation of a foundation structure at the designated position, the vessel is preferably orientated at an orientation selected between an orientation where the bow is substantially facing incoming waves head-on and an orientation where the centre line of the vessel being substantially parallel with the wave propagation direction of the waves. In preferred embodiments, the vessel is positioned with its bow facing incoming waves and in other embodiments, the vessel is positioned with the centre line being parallel with the wave propagation direction of the waves with one of the vessel's side facing incoming waves. By this, the possibility of waves moving into the recess 6 is greatly reduced providing calm water inside the recess, whereby the recess 6 provides a shelter from waves being beneficial during installation of a foundation structure.

In fig. 2 a vessel is schematically illustrated in a designated location for installation of a foundation structure and where the vessel is maintained in a preferred orientation relatively a wave propagation direction 22. In fig. 2 vertical equally spaced apart lines represent tops of waves as indicated in the upper right corner of fig. 2 where the wavy line represents a wave. In the embodiment shown in fig. 2, the vessel is orientated with each bow facing incoming waves, and with the centre line parallel with the wave propagation direction 22.

The vessel also comprising an upending device 9 arranged at the recess 6 and the upending device 9 is configured to upend a foundation structure. More detailed, the upending device is configured to receive at least a section of said foundation structure 2 being positioned substantially horizontally and axially aligned with a center line 12 of the vessel (see fig. 1A). The upending device 9 being further configured to rotate about a horizontal rotational axis 14 (see fig. 1B) being substantially perpendicular to the center line 12 of the vessel so that upon rotating, said end of the foundation structure is positioned in the recess 6 and with the foundation structure 2 in an upright position. It is to be noted that orientation such as horizontal, vertical or the like preferably refers to the orientation of the deck and that due to movement of the ship, e.g. caused by waves, these orientation may differs from an earth bound co-ordinate system.

With the foundation structure being upright, the upending device can be configured to provide support during vertical lowering within the recess 6 of the foundation structure 2 to said position at sea for installation.

By this, the foundation structure is manoeuvred and lowered within the boundaries of the recess.

Preferably, the upending and lowering of the foundation structure 2 are processes executed subsequently to each other, in the sense that during the upending the position of the foundation structure relatively to the upending device 9 is maintained substantially fixed, and when the upending device 9 has positioned the foundation structure 2 in a vertical position ready for being lowered, the position of the upending device 9 is maintained and the foundation structure 2 is lowered vertically downwardly.

In particular preferred embodiments, the recess is arranged at the center line of the vessel, said recess is preferably symmetrical around the center line and preferably symmetrically arranged at the center line.

While the shaping and dimension of the recess 6 may be made in accordance with the dimensioning and shaping of the foundation structure, non-limiting examples of such dimensioning may be: a recess has a width and a length, wherein the length is larger than half the width, and wherein the length preferably is at least 1/20^{th} , such as at least 1/10^{th} and smaller than 1/5^{th} of the design water line of the vessel, and wherein the width preferably is larger than 10 meters, such as larger than 15 meters., and preferably smaller than 35 meters

In order to maintain the foundation structure in desired position in the upending device 9, the upending device 9 may comprise a constraining element for receiving an end of said foundation structure

In some preferred embodiments, the upending device 9 comprising a cradle 15 configured to receive the foundation structure 2.

To provide for the rotation of the upending device, the upending device 9 may be hingedly mounted to the vessel to rotate the upending device about said horizontal rotational axis.

In preferred embodiments, the upending device 9 is hingedly mounted at two positions 18a, 18b (see e.g. fig. 1B) and wherein said horizontal axis extends in-between said two positions 18a, 18b. Preferably, the two positions are both elevated relatively to the recess 6 with one position on either side of the centerline, preferably on either side of the recess 6.

The vessel preferably also comprises one or more actuators, such as hydraulic actuator(s), pneumatic actuator(s) and/or electrical actuator(s), connected to the upending device to provide or assist said rotation of the upending device upon activation of the actuators.

In preferred embodiments, the upending device comprising one or more activatable gripping elements 19 which upon activation provides a force directed inwardly to provide a grip on the foundation structure. This force will at least assist in maintaining the foundation structure in a desired position in the upending device. As perhaps most clearly visible by the differences between fig. 1A and fig. 1B, the gripping elements 19 may comprise two curved elements 19a hinged individually to a further curved element 19b attached to the upending device. The two hinged sections 19a can be positioned in a position as shown in fig. 1A for receiving a foundation structure 2 and in a closed position as shown in fig. 1B where the two curved elements 19a in combination with the further curved element 19b defines a tubular structure encircling the perimeter of the foundation structure 2. As illustrated, the further curved element 19b and the gripping elements 19a rotates with the upending device. Flexible elements (not shown) may be provided in-between the inside of the gripping elements 19a and the further curved element 19b and the outside of the foundation structure 2 to provide a flexible gripping on the foundation structure 2. Such flexible elements may also allow for longitudinal movement of the foundation structure 2.

In preferred embodiments, the upending device comprising one or more activatable stopping elements 20 (see e.g. fig. 1B) which upon activation acts as an abutment member for an end of the foundation structure 2 to prevent the foundation structure to proceed beyond the stopping element(s) 20. In the embodiment shown in fig. 1, the stopping element 20 may be characterized as a claw like element. In the disclosed embodiment, the stopping element 20 comprising two parallel beams 20a connected at their ends by a cross member 20b. Opposite to the cross member 20b, the beams 20a are rotatably mounted to allow rotation of the stopping element 20. As perhaps most clearly identified by comparing the differences between figs. 1B and 1C, the stopping element 20 rotates between a stopping position (fig. 1B) where the end of foundation structure 2 abuts the cross member 20b, and a non-stopping position (fig. 1C) where the cross member 20b is position outside the foundation structure. During upending of the foundation structure 2 to vertical position, the stopping element 20 is positioned in the stopping position, and during lowering of the foundation structure 2, the stopping element is positioned in the non-stopping position.

In preferred embodiments, the vessel may further comprise a crane 13. Such a crane is typically configured to hoist said foundation structure 2 from a deck position to the upending device 9 with an end of the foundation structure received by the upending device 9 (as illustrated in fig. 1B). Thereafter, the crane 13 connects to the foundation structure and provides an upwardly directed pull in the foundation structure 2 at position between the rotational axis and an end of the foundation structure being opposite to the end received and gripped by the upending device 9.

In preferred embodiments, the vessel comprises a rack 16 configured to store a plurality of foundation structures axially aligned with the centerline 12 of the vessel. Preferably, the rack 16 is arranged on the deck of the vessel preferably displayed to one side of the vessel.

As illustrated in fig. 1A such a rack 16 may comprise a number of uprights 21 attached to the deck. The uprights 21 are in the direction transversal to the longitudinal direction of the vessel arranged with a distance matching the external dimension of the foundation structures, The height of the uprights 21 is typically selected to match the total height of the number of foundation structures to be stored in the height direction. In the embodiment shown in fig. 1, two foundation structures 2 are stored in the height direction and three in the transversal direction, that is in total six foundation structures 2 stored in the rack.

A rest (not illustrated) is arranged in between transversal neighbouring uprights to receive a section of a foundation structure 2. Such a rest typically mimic the outer shape of the foundation structure 2. In case of cylindrical foundation structures 2 the rest preferably has a cross section of a semi-circle. Such rests are typically mounted in between transversal neighbouring uprights so that a clearance is provide between foundation structures placed above each other, and so that bottom sides of the foundation structure are supported by the rests. Although it may be preferred that all rest are movable arranged, the lower most rest may be fixedly arranged, and the remaining rests in between two foundation structures 2 being removable arranged to allow access to all the foundation structures 2.

Fastening devices, such as straps, may be used to fastening the foundation structures in the rack 16

The uprights 21 are in the longitudinal direction spaced apart preferably with a distance so that the ends of the foundation structures 2 protrude beyond the outer most (in longitudinal direction) uprights 21. The uprights 21 may be moveable arranged to the deck to allow for adjusting the distance between neighbouring uprights 21 in transversal direction, thereby allowing the rack 16 to be set to store foundation structures of different sizes, and/or to allow for adjusting the distance between neighbouring uprights 21 in the longitudinal direction, thereby allowing the rack to store foundation structures 2 with different lengths.

A rack 16 may also be used to store a plurality of foundation structures 2 in an upright orientation as illustrated in fig. 1A wherein the foundation structures are referenced by 2', to indicate that these foundation structures 2' each being shorter than the other foundation structures 2 and stored in a upright orientation. Such a foundation structure 2' may be a transition piece to be installed on top of a foundation structure 2 being a monopile and serving as a base for further installation of a wind turbine. Alternatively to or in combination with using a rack for storage, the shorter foundation structures 2' may be bolted to the deck of the vessel although other fastenings may be used. It is furthermore noted, that the invention is not considered limited to storing shorter foundation structures 2' in upright position as they may be stored horizontally as the longer foundation structures 2.

A vessel according to any one of the preceding claims further comprising hammer tool 17 configured to ram a foundation structure 2 into the seabed. Such a hammer tool 17 may preferably be carried by the crane in embodiments comprising a crane.

The invention also relates to method of installing a foundation structure 2, such as a monopile, at a position at sea, the position may be a foundation extending from the seabed or may be a position in or on the seabed. The method is carried out by use of the vessel according to embodiments presented herein and comprises:
- arranging a foundation structure 2 in the upending device 9,
- rotate the upending device 9 by an amount positioning the foundation structure 2 in an upright position, and
- provide a vertical lowering within the recess 6 of the foundation structure 2 to said position at sea for installation.

Prior to provide the vertical lowering within the recess 6 of the foundation structure 2, the stopping element 20, the gripping elements 19 and/or other elements preventing a longitudinal movement of the foundation structure within the upending device 9 is/are released and the crane 13 will carry the weight of the foundation structure 2 and controlling the vertical lowering of the foundation structure 2. When a hammer tool 17 is used to ram the foundation structure 2 into the seabed, the crane 13 is preferably operated not to impair the ramming although controlling the vertical orientation of the foundation structure 2.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

List of reference symbols used:
- 1: Vessel
- 2: Foundation structure
- 3: Hull
- 4: Stern
- 5: Aft
- 6: Recess
- 7: Bow
- 8: Opening
- 9: Upending device
- 12: Center line
- 13: Crane
- 14: Rotational axis
- 15: Cradle
- 16: Rack
- 17: Hammer tool
- 18a, 18b: Hinge positions
- 19: Gripping elements
- 19a: Curved element
- 19b: Further curved element
- 20: Stopping element
- 20a: Beam of stopping element
- 20b: Cross member of stopping element
- 21: Upright
- 22: Wave propagation direction
Itemized list of preferred embodiments:
Item 1. A vessel (1) configured to install a foundation structure (2), such as a monopile, at a position at sea, the position may be a foundation extending from the seabed or may be a position in or on the seabed, the foundation structure comprising an elongate element, the vessel comprising:
   - a hull (3) having stern (4) at the aft (5) of the vessel (1), wherein the stern is provided with recess (6) extending from the stern and towards a bow (7) of the vessel (1), the recess provides an opening (8) going through the hull (3) allowing sea access from a deck position,
   - an upending device (9) arranged at the recess (6), said upending device (9) being configured to
      ∘ receive a at least a section of said foundation structure (2) being positioned substantially horizontally and axially aligned with a center line (12) of the vessel, and
      ∘ rotate about a horizontal rotational axis (14) being substantially perpendicular to the center line (12) of the vessel so that upon rotating, said end of the foundation structure is positioned in the recess (6) and with the foundation structure (2) in an upright position,
      ∘ provide a vertical lowering within the recess (6) of the foundation structure (2) to said position at sea for installation.
Item 2. A vessel according to item 1, wherein the recess is arranged at the center line of the vessel, said recess is preferably symmetrical around the center line and preferably symmetrically arranged at the center line.
Item 3. A vessel according to item 1 or 2, wherein the recess has a width and a length, wherein the length is larger than half the width, and wherein the length preferably is at least 1/20^{th}, such as at least 1/10^{th} and smaller than 1/5^{th} of the design water line of the vessel, and wherein the width preferably is larger than 10 meters, such as larger than 15 meters., and preferably smaller than 35 meters
Item 4. A vessel according to any one of items 1-3, wherein the upending device (9) comprising a constraining element for receiving said end of said foundation structure
Item 5. A vessel according to any one of items 1-3, wherein the upending device (9) comprising a cradle (15) configured to receive the foundation structure (2).
Item 6. A vessel according to any one of the preceding items, wherein the upending device (9) is hingedly mounted to the vessel to rotate the upending device about said horizontal rotational axis.
Item 7. A vessel according to item 6, wherein the upending device (9) is hingedly mounted at two positions (18a, 18b) and wherein said horizontal axis extends in-between said two positions (18a, 18b), said two positions are both elevated relatively to the recess (6) with one position on either side of the centerline, preferably on either side of the recess (6).
Item 8. A vessel according to any one of the preceding items, further comprising one or more actuators, such as hydraulic actuator(s), pneumatic actuator(s) and/or electrical actuator(s), connected to the upending device to provide or assist said rotation of the upending device upon activation of the actuators.
Item 9. A vessel according to any one of the preceding items, wherein the upending device comprising one or more activatable gripping elements (19) which upon activation provides a force directed inwardly to provide a grip on the foundation structure.
Item 10. A vessel according to item 9, wherein the gripping elements (19) comprise two curved elements (19a) hinged individually to a further curved element (19b) forming part of the upending device so as to positioning said two hinged sections (19a) in a position for receiving said foundation structure (2) and in a closed position wherein said two curved elements (19a) in combination with the further curved element (19b) defines a tubular structure encircling the perimeter of said foundation structure (2).
Item 11. A vessel according to any one of the preceding items, wherein the upending device comprising one or more activatable stopping elements (20) which upon activation acts as an abutment member for an end of the foundation structure (2) to prevent the foundation structure to proceed beyond the stopping element(s) (20).
Item 12. A vessel according to item 11, wherein said stopping element(s) (20) is(are) rotatably mounted to the vessel so as to allow rotation of the stopping element(s) between a stopping position in which an end of said foundation structure abuts a part of said stopping element(s) and a non-stopping position in which said stopping element(s) do not abut said end of said foundation structure (2).
Item 13. A vessel according to item 11 or 12, wherein one or more such as all of said stopping elements (20) comprising two beams (20a) preferably extending in parallel and being connected at their ends by a cross member (20b), and wherein said beams (20a) are rotatably mounted the vessel to allow rotation of the stopping element 20.
Item 14. A vessel according to any one of the preceding items, further comprising a crane (13) being configured to
   ∘ hoist said foundation structure (2) from a deck position to the upending device (9) with an end of the foundation structure received by the upending device (9), and subsequently
   ∘ providing an upwardly directed pull in the foundation structure (2) at position between the rotational axis and an end of the foundation structure being opposite to the end received and gripped by the upending device (9).
Item 15. A vessel according to any one of the preceding items, wherein the vessel comprising a rack (16) configured to store a plurality of foundation structures axially aligned with the centerline (12) of the vessel.
Item 16. A vessel according to item 15, wherein the rack (16) is arranged on the deck of the vessel preferably displayed to one side of the vessel.
Item 17. A vessel according to any one of the preceding items further comprising hammer tool (17) configured to ram a foundation structure (2) into the seabed.
Item 18. A vessel according to any one of the preceding items further comprising one or more propulsion devices configured to manoeuvre the vessel between different locations and/or maintain the vessel in a designated location for installation of said foundation structure (2).
Item 19. A vessel according to any item 18, wherein one or more of said one or more propulsion devices is configured to automated maintaining the vessel in a designated location based on one or more position reference sensors, and/or wherein the vessel is configured to maintain the vessel in a designated location passively by anchoring the vessel to the seabed as said designated position.
Item 20. A vessel according to item 18 or 19, wherein one or more of the propulsion devices are configured to maintain the vessel in substantial fixed position and with an orientation of the vessel relatively to incoming waves
Item 21. A vessel according to item 20, wherein said substantial fixed position includes an orientation of the vessel, where said orientation being selected between an orientation where a bow of said vessel substantially facing incoming waves head-on and an orientation where a centre line of the vessel being substantially parallel with a wave propagation direction of said waves.
Item 22. A method of installing a foundation structure (2), such as a monopile, at a position at sea, the position may be a foundation extending from the seabed or may be a position in or on the seabed, the method is carried out by use of the vessel according to any one of the preceding items and comprising:
   - arranging a foundation structure (2) in the upending device (9),
   - rotate the upending device (9) by an amount positioning the foundation structure (2) in an upright position, and
   - provide a vertical lowering within the recess (6) of the foundation structure (2) to said position at sea for installation.
Item 23. A method according to item 22, when dependent on items 18-21, further comprising
   prior to install said foundation structure:
   - manoeuvre said vessel to an installation position,
   - determine an orientation of wave propagation direction at said installation position,
   - orientating the vessel at an orientation being selected between an orientation where a bow of said vessel substantially facing incoming waves head-on and an orientation where a centre line of the vessel being substantially parallel with the waves, and
   during install of said foundation structure:
   - maintaining said vessel at the installation position and at said orientation.

## Claims

1. A vessel (1) configured to install a foundation structure (2), such as a monopile, at a position at sea, the position may be a foundation extending from the seabed or may be a position in or on the seabed, the foundation structure comprising an elongate element, the vessel comprising:
• a hull (3) having stern (4) at the aft (5) of the vessel (1), wherein the stern is provided with recess (6) extending from the stern and towards a bow (7) of the vessel (1), the recess provides an opening (8) going through the hull (3) allowing sea access from a deck position,
• an upending device (9) arranged at the recess (6), said upending device (9) being configured to
∘ receive at least a section of said foundation structure (2) being positioned substantially horizontally and axially aligned with a center line (12) of the vessel, and
∘ rotate about a horizontal rotational axis (14) being substantially perpendicular to the center line (12) of the vessel so that upon rotating, an end of said section of the foundation structure is positioned in the recess (6) and with the foundation structure (2) in an upright position,
∘ provide a vertical lowering within the recess (6) of the foundation structure (2) to said position at sea for installation.

2. A vessel according to claim 1, wherein said end is a lower end of said foundation structure (2).

3. A vessel according to claim 1 or 2, wherein the recess is arranged at the center line of the vessel, said recess is preferably symmetrical around the center line and preferably symmetrically arranged at the center line.

4. A vessel according any one of the preceding claims, wherein the recess has a width and a length, wherein the length is larger than half the width, and wherein the length preferably is at least 1/20^{th}, such as at least 1/10^{th} and smaller than 1/5^{th} of the design water line of the vessel, and wherein the width preferably is larger than 10 meters, such as larger than 15 meters, and preferably smaller than 35 meters.

5. A vessel according to any one of the preceding claims, wherein the upending device (9) is hingedly mounted at two positions (18a, 18b) and wherein said horizontal axis extends in-between said two positions (18a, 18b), said two positions are both elevated relatively to the recess (6) with one position on either side of the centerline and on either side of the recess (6).

6. A vessel according to any one of the preceding claims, further comprising a crane (13)
∘ typically being configured to hoist said foundation structure (2) from a deck position to the upending device (9) with an end of the foundation structure received by the upending device (9), and subsequently
∘ being configured to providing an upwardly directed pull in the foundation structure (2) at position between the rotational axis and an end of the foundation structure being opposite to the end received and gripped by the upending device (9).

7. A vessel according to claim 6, wherein the crane (13) is positioned at the side of the vessel and forward of the recess (6).

8. A vessel according to claim 6 or 7, wherein the crane (13) is configured to provide an upwardly directed pull in the foundation structure (2) at an end of the foundation structure being opposite to the end received and gripped by the upending device (9) arranged at the recess (6).

9. A vessel according to any one of the preceding claims, wherein the vessel comprising a rack (16) configured to store a plurality of foundation structures axially aligned with the centerline (12) of the vessel.

10. A vessel according to claim 9, wherein the rack (16) is arranged on the deck of the vessel preferably displayed to one side of the vessel.

11. A vessel according to any one of the preceding claims further comprising hammer tool (17) configured to ram a foundation structure (2) into the seabed.

12. A vessel according to any one of the preceding claims further comprising one or more propulsion devices configured to manoeuvre the vessel between different locations and/or maintain the vessel in a designated location for installation of said foundation structure (2).

13. A vessel according to any claim 12, wherein one or more of said one or more propulsion devices is configured to automated maintaining the vessel in a designated location based on one or more position reference sensors, and/or wherein the vessel is configured to maintain the vessel in a designated location passively by anchoring the vessel to the seabed as said designated position.

14. A method of installing a foundation structure (2), such as a monopile, at a position at sea, the position may be a foundation extending from the seabed or may be a position in or on the seabed, the method is carried out by use of the vessel according to any one of the preceding claims and comprising:
• arranging a foundation structure (2) in the upending device (9),
• rotate the upending device (9) by an amount positioning the foundation structure (2) in an upright position, and
• provide a vertical lowering within the recess (6) of the foundation structure (2) to said position at sea for installation.

15. A method according to claim 14, when dependent on claims 12 or 13, further comprising
prior to install said foundation structure:
• manoeuvre said vessel to an installation position,
• determine an orientation of wave propagation direction at said installation position,
• orientating the vessel at an orientation being selected between an orientation where a bow of said vessel substantially facing incoming waves head-on and an orientation where a centre line of the vessel being substantially parallel with the waves, and
during install of said foundation structure:
• maintaining said vessel at the installation position and at said orientation.
